(19) Europäisches Patentamt
European Patent Office
Office européen des brevets

(11) EP 2 033 518 A1

(12) EUROPEAN PATENT APPLICATION

(43) Date of publication:
11.03.2009 Bulletin 2009/11

(21) Application number: 07115808.3

(22) Date of filing: 06.09.2007

(51) Int Cl.:
*A01N 43/22* (2006.01) *A01N 43/60* (2006.01)
*A01N 43/90* (2006.01) *A01N 31/02* (2006.01)
*A01N 49/00* (2006.01) *A01P 7/00* (2006.01)

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Cheminova A/S**
**7620 Lemvig (DK)**

(72) Inventor: **Pedersen, Morten**
**DK-7620, LEMVIG (DK)**

(74) Representative: **Rasmussen, Torben Ravn et al**
**Internationalt Patent-Bureau A/S**
**Rigensgade 11**
**1316 Copenhagen K (DK)**

# (54) Pesticidal compositions

(57) Presented are pesticidal compositions comprising at least one pesticide selected among Glutamate- or GABA-gated chloride channel agonist pesticides and at least one synergist which is selected among long chain alcohols. The combinations of these compounds show a synergistic effect allowing a composition to be prepared comprising a lesser amount of pesticide, while still controlling the harmful pests.

EP 2 033 518 A1

Printed by Jouve, 75001 PARIS (FR)

## Description

### Field of the Invention

The present invention relates to pesticidal compositions in general. Furthermore, the present invention relates to a method of obtaining a pesticidal composition containing a pesticide and a synergist, a method of reducing the amount of pesticide in a pesticidal composition while maintaining the pesticidal effect, a method for controlling harmful pests on plants, a method for controlling harmful pests in or on animals including humans, a method for obtaining reduced application rates of a pesticide while maintaining the pesticidal effect, and a method for obtaining reduced dose rates of a pesticide while maintaining the pesticidal effect. The pesticide used in the pesticidal composition is selected among Glutamate- or GABA-gated chloride channel agonist pesticides.

### Background

Pesticidal active compounds whose targets are insects and other arthropods and nematodes usually have a neurological effect on such pests. Their pesticidal target sites are defined as the specific biochemical or physiological sites within an organism that pesticide compounds interact with to create a toxic effect. Among neurological target sites are acetylcholinesterase enzyme, voltage-gated sodium channels, Glutamate- and GABA-gated chloride channels and nicotinic acetylcholine receptors. The actions of pesticides at these sites are diverse and range from enzyme inhibition, to receptor agonism (stimulation), receptor antagonism (blockage), and ion channel modulation. Glutamate and gamma-aminobutyric acid (GABA) are inhibitory neurotransmitters that elicit the influx of chloride ions into central neurons through chloride channels.

In United States patent no. US 4,560,677 synergistic compositions are disclosed comprising avermectins or milbemycins and a synergist selected among agricultural spray oils.

An insecticidal composition must satisfy a range of requirements to be viable on the market. One such requirement of the pesticidal composition is the ability to be selective in biologic action and have low toxicity and a high margin of safety to humans, crops, economic animals, aquatic organisms and birds. Another requirement is the desire that the composition should be environmental-friendly in that there should be demonstrably low impacts on the environment. Further, there should be none or little insect resistance to such compounds or combinations. Also, there is a need for improved compositions which are not only more effective against particular pests, but which are also versatile and can be used to combat a wide spectrum of pests.

There is an increasing demand and need for pesticidal compositions, which can be used against pests afflicting beneficial crops as well as animals, including humans or their environments, and which are effective at low application rates of the pesticide. The present invention is directed towards such pesticidal compositions in which the pesticide can be applied in a low application rate or a low dose rate. Thus, the environment is favored as the total amount of pesticide applied to a field for a certain pesticidal effect to be obtained is lowered. As the pesticide is far the most expensive component in a pesticidal composition, also the cost for producing the pesticidal composition is low.

### Description of the invention

The present invention relates to a pesticidal composition comprising a pesticide, which is selected among glutamate- or GABA-gated chloride channel agonist pesticides, and a synergist selected among long chain alcohols. It has surprisingly been found that by combining Glutamate- or GABA-gated chloride channel agonist pesticides (A) with at least one synergist (B) which is selected among long chain alcohols an enhanced pesticidal activity of the chloride channel agonist pesticides is observed when used for the control of harmful pests, i.e. a synergistic interaction between the chloride channel agonist pesticides and the compound(s) B is observed.

According to an aspect of the invention a method of obtaining a pesticidal composition containing a pesticide and a synergist is disclosed, said composition having an actual pesticidal effect higher than the sum of pesticidal effects of each of the pesticide and the synergist when taken alone, comprising the step of replacing a part of the amount of pesticide, which is selected among glutamate- or GABA-gated chloride channel agonist pesticides, by a synergistic amount of a synergist selected among long chain alcohols. The pesticidal composition obtained according to this aspect is more environmental-friendly than a traditional composition containing the same pesticide since less pesticide is used to obtain a pesticidal effect.

According to a second aspect, a method of reducing the amount of pesticide in a pesticidal composition while maintaining a similar pesticidal effect is disclosed. The method comprises the step of replacing a part of the amount of pesticide, which is selected among glutamate- or GABA-gated chloride channel agonist pesticides, by a synergistic amount of a synergist selected among long chain alcohols. As the pesticide generally is the most expensive part of the pesticidal composition, the method of the present aspect benefits from that by providing a less expensive pesticidal

composition.

In a third aspect, the present invention provides a method for controlling harmful pests on plants. The method involves applying to a plant to be treated a composition containing a pesticide and a synergist, said composition having an actual pesticidal effect higher than the sum of pesticidal effects of each of the pesticide and the synergist when administered alone, wherein a part of the amount of pesticide, which is selected among glutamate- or GABA-gated chloride channel agonist pesticides, is replaced by a synergistic amount of a synergist selected among long chain alcohols. In this aspect of the invention a less expensive pesticidal composition may be applied to a plant to obtain a satisfactory pesticidal effect.

In a fourth aspect of the invention a method for controlling harmful pests in or on animals including humans is provided. The method comprises administrating to an animal or a human in need thereof a pharmaceutical or veterinary effective amount of a composition containing a pesticide and a synergist, said composition having an actual pesticidal effect higher than the sum of pesticidal effects of each of the pesticide and the synergist when administered alone, wherein a part of the amount of pesticide, which is selected among glutamate- or GABA-gated chloride channel agonist pesticides, is replaced by a synergistic amount of a synergist selected among long chain alcohols. As pesticides generally are alien to the human or animal body they should be used in a small amount to avoid any side effects. According to this aspect a method is provided for effective treatment of animals or humans suffering from a disease emanating from pests using a minimum of pesticide.

According to a fifth aspect of the present invention a method for obtaining a reduced application rate of a pesticide is devised. The method comprises the steps of providing a pesticidal composition containing a pesticide, which is selected among glutamate- or GABA-gated chloride channel agonist pesticides, and an synergistic mount of a synergist selected among long chain alcohols, and applying the pesticidal composition to a plant in an amount sufficient for controlling harmful pest. The application rate is generally measured as the amount of active ingredient, i.e. pesticide, applied to a certain area, such as hectare or acre. According to this aspect of the invention the environment benefits from the application of a minor amount of pesticide while the harmful pests are still controlled. Further, by lowering the application rate, the pre-harvest interval (PHI) recommended for use in beneficial crops, i.e. the time between the last pesticide application and harvest of the treated crops, is lowered, and thus providing improved protection of the crops against harmful pests as close to the time of harvest as possible without increasing undesired residual effects caused by the applied pesticide and/or possible breakdown products thereof.

According to a sixth aspect of the invention, a method for obtaining a reduced dose rate of a pesticide is provided. More specifically, the method involves the steps of providing a pesticidal composition containing a pesticide, which is selected among glutamate- or GABA-gated chloride channel agonist pesticides, and a synergistic amount of a synergist selected among long chain alcohols, administering the pesticidal composition to an animal or a human in need thereof in a pharmaceutical or veterinary effective amount sufficient for controlling harmful pest. The dose rate is generally measured as the amount of pesticide administrated per weight of the animal or human in need of a treatment. This aspect provides a method in which a less amount of pesticide can be used for controlling harmful pest. Further, by lowering the dose rate, undesired residual effects cause by the applied pesticide and/or possible breakdown products thereof is reduced.

Generally, the compositions are active against all or individual stages of development of the pests and against normally sensitive species and resistant species, i.e. species that have developed resistance against the pesticides (A). The compositions may also be useful for controlling pests that have proven to be unaffected by the pesticides (A) either completely or requiring unacceptable high doses to provide adequate control.

In an aspect of the invention it relates to a pesticidal composition comprising at least one compound A which is selected among Glutamate- or GABA-gated chloride channel agonist pesticides and at least one compound B which is selected among long chain alcohols, wherein the compounds A and B are present in a synergistically effective amount.

The invention also relates to a kit comprising (i) a first composition comprising at least one pesticide selected among glutamate- or GABA-gated chloride channel agonist pesticides and (ii) a second composition comprising a synergistic amount of a synergist selected among long chain alcohols. In this connection the term "a kit" is intended to mean a collection of at least two items intended for coordinated use, i.e. for use as a mixture or for a specified consecutive use. The components of the kit may be provided in one package, or it may be provided in separate packages. Further the kit usually comprises written instructions for the intended use.

The invention further relates to various uses. In an aspect, the invention relates to the use of a synergist selected among long chain alcohols for enhancing the effect of a pesticidal composition comprising a pesticide, which is selected among glutamate- or GABA-gated chloride channel agonist pesticides. In another aspect the invention relates to the use of a synergist selected among long chain alcohols for preparation of a pesticidal composition having a reduced amount of pesticide while maintaining a similar pesticidal effect, wherein the pesticide is selected among glutamate- or GABA-gated chloride channel agonist pesticides. In yet another aspect the invention relates to the use of a synergist selected among long chain alcohols for reducing the application or dose rates of a pesticidal composition in the control of pests while maintaining a similar pesticidal effect, wherein the pesticide is selected among glutamate- or GABA-gated

chloride channel agonist pesticides. In a further aspect the invention relates to the use of a pesticide selected among glutamate- or GABA-gated chloride channel agonist pesticides, and a synergist selected among long chain alcohols, for the manufacture of a medicament for the control of pests in or on humans or animals or their environs, said medicament comprising a reduced amount of pesticide while maintaining a similar pesticidal effect by replacing a part of the amount of pesticide with a synergistic amount of the synergist.

**Detailed disclosure of the invention**

Glutamate- or GABA-gated chloride channel agonist pesticide compounds are a well known and versatile group of compounds that are used as agrochemicals and as drugs within both human and veterinary medicine. The compounds are known to have both insecticidal, acaricidal and anthelminthic effect even when applied at very low rates compared to other agrochemicals and drugs. They are equally suitable for controlling both plant pests and ecto- and endo-parasites in animals and humans. Their mode of action is based on the interference with the passage of chloride ions through the Glutamate or GABA regulated chloride ion channels, which results in uncontrolled physiological activity and subsequent death of the pest. The effect is inhibitory, i.e., the compound interferes agonistically with the function of the Glutamate- or GABA-gated chloride channels and elicits increased chloride current into cells. The increased chloride current results in intracellular hyperpolarization and (neuro)inhibition via the cancellation of positively charged excitatory impulses carried by sodium currents, and eventually leads to the death of the pest. By the term "agonist" as used herein is meant a chemical that produces a response, such as excitation or inhibition of action potentials when it binds to a specific receptor, opposed to an "antagonist" which is a chemical that, when it binds to a receptor, blocks the receptor and prevents it from responding.

Among the Glutamate and GABA-gated chloride channel agonist pesticides are macrocyclic lactone compounds, which have a complex ring structure, and include the well known groups of avermectins, milbemycines and the spinosyns. The compound Piperazine and salts thereof is also a known Glutamate and GABA-gated chloride channel agonist pesticide. These pesticides are known not to possess a rapid knock-down-effect, e.g. significantly lower than that observed with insecticidal compounds from the group of pyrethroids.

The avermectins are a group of macrocyclic lactone compounds produced by fermentation of *Streptomyces avermitilis* and mutations thereof. The individual avermectins, either naturally derived or prepared by synthetic means (e.g. Ivermectin), are usually mixtures of up to 8 major components designated as $A_{1a}$, $A_{1b}$ $A_{2a}$, $A_{2b}$, $B_{1a}$, $B_{1b}$ $B_{2a}$, $B_{2b}$ in various ratios. For instance Abamectin is a mixture of the two closely structurally related components designated $B_{1a}$ and $B_{1b}$ usually in a 80:20 ratio, whereas the active compound known as Aversectin C further comprises additional components in addition to those in Abamectin. Avermectin compounds are, for example, known from United States patents nos. 3,950,360; US 4,310,519; US 4,378,353; US 5,288,710; US 4,427,663; US 4,199,569; US 5,015,630; US 5,089,480, US 5,981,500 and PCT publication no. WO 02/068442-A1.

The structure of the avermectins can be illustrated by the general formula (1), which only serves an illustrative purpose:

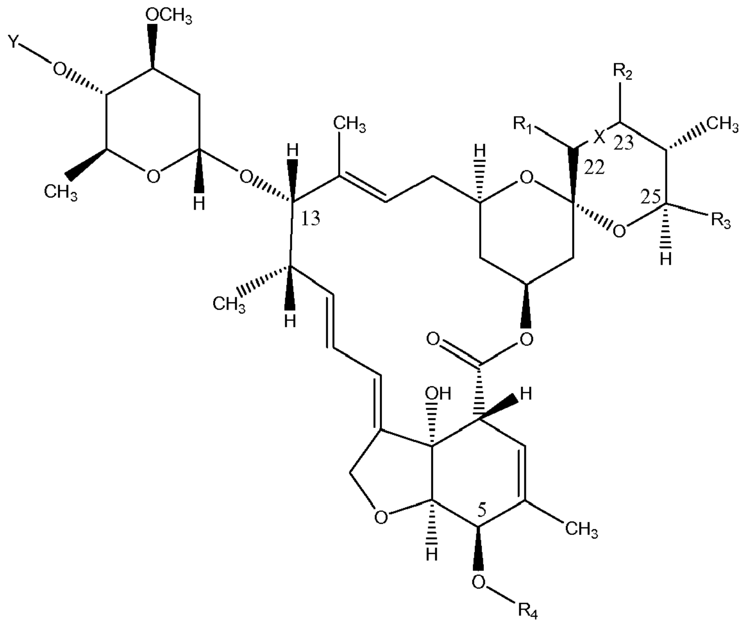

(1)

When X represents a double bond, the substituents $R_1$ and $R_2$ on the C-22 and C-23 positions are not present. Illustrative substituents in the above formula (1) are those where Y represents H or an optionally substituted sugar or aminosugar unit, $R_1$ represents H, $R_2$ represents H or hydroxy, $R_3$ represents alkyl or cycloalkyl and $R_4$ represents H or alkyl.

Examples of avermectins falling within the general structure (1) are:

| Name | Y | $-C22R_1-X-C23R_2$ | $R_3$ | $R_4$ |
|---|---|---|---|---|
| Avermectin $A_{1a}$ | 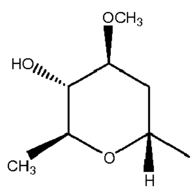 | -CH=CH- | sec-Butyl | $CH_3$ |
| Avermectin $A_{1b}$ | 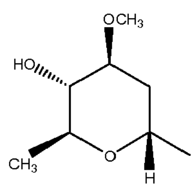 | -CH=CH- | iso-Propyl | $CH_3$ |
| Avermectin $A_{2a}$ | 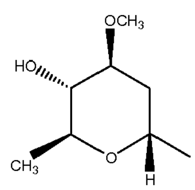 | $-CH_2-CHOH-$ | sec-Butyl | $CH_3$ |

(continued)

| Name | Y | $-C22R_1-X-C23R_2$ | $R_3$ | $R_4$ |
|---|---|---|---|---|
| Avermectin $A_{2b}$ | 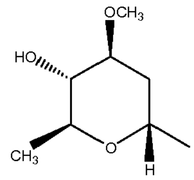 | $-CH_2-CHOH-$ | iso-Propyl | $CH_3$ |
| Avermectin $B_{1a}$ | 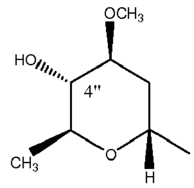 | -CH=CH- | sec-Butyl | H |
| Avermectin $B_{1b}$ | 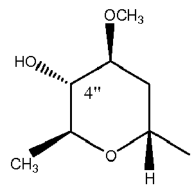 | -CH=CH- | iso-Propyl | H |
| Avermectin $B_{2a}$ | 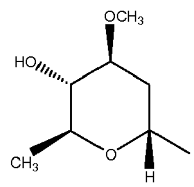 | $-CH_2-CHOH-$ | sec-Butyl | H |
| Avermectin $B_{2b}$ | 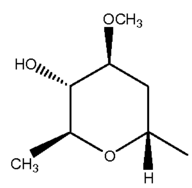 | $-CH_2-CHOH-$ | iso-Propyl | H |
| Ivermectin $B_{1a}$ | 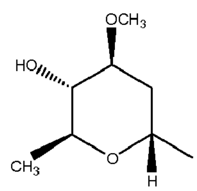 | $-CH_2-CH_2-$ | sec-Butyl | H |
| Ivermectin $B_{2a}$ | 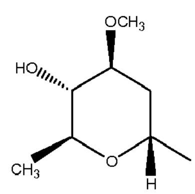 | $-CH_2-CH_2-$ | iso-Propyl | H |

(continued)

| Name | Y | $-C22R_1-X-C23R_2$ | $R_3$ | $R_4$ |
|---|---|---|---|---|
| Doramectin | 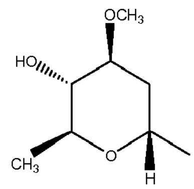 | -CH=CH- | Cyclohexyl | H |
| Emamectin $B_{1a}$ | 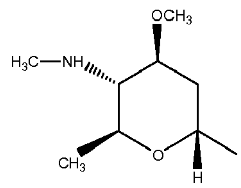 | -CH=CH- | sec-Butyl | H |
| Emamectin $B_{1b}$ | 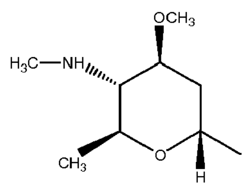 | -CH=CH- | iso-Propyl | H |
| Eprinomectin $B_{1a}$ | 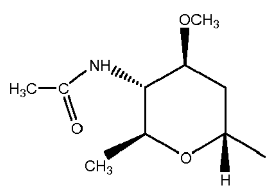 | -CH=CH- | sec-Butyl | H |
| Eprinomectin $B_{1b}$ | 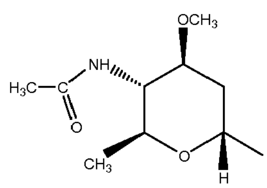 | -CH=CH- | iso-Propyl | H |

Another avermectin is Selamectin known from United States patent no. US 5,981,500. Yet another group of avermectins are those disclosed in US patent no. 6,933,260, which are derivatives of the avermectins $B_1$ having an aminosulfonyloxy substituent in the 4"-position as indicated above. Avermectin compounds wherein the substituent at the 5-position in the above formula (1) is a substituted oximino group or the keto group are also known. When appropriate, the avermectins also include various salt forms thereof, e.g. Emamectin as its benzoate salt.

The milbemycins differ structurally from the avermectins, mainly in the absence of the sugar residue on the C-13 carbon. Milbemycins are produced by fermentation of *Streptomyces* species, which further can be altered by synthetic means (e.g. Lepimectin). Milbemycins include Milbemectin and Milbemycin oxime, the latter produced by fermentation of the actinomycete *Streptomyces hygroscopicos aureolacrimosus,* and Moxidectin, produced by chemical modification of the milbemycin Nemadectin, a product of fermentation of *Streptomyces cyanogriseus noncyanogenus.* The individual milbemycins, either naturally derived or prepared by synthetic means, are also usually mixtures of several major components. For instance Milbemectin is a mixture of two major components designated as $A_3$ and $A_4$. Milbemycins are known, for example, from United States patent nos. US 3,950,360; 4,547,520, US 4,900,753; US 5,346,918; US 5,428,034; US 4,587,247; US 5,405,867; US 5,276,033; US 4,945,105; US 4,963,582; US 4,869,901 and US 5,614,470. When appropriate, the milbemycins also include various salt forms thereof.

The spinosyns are also fermentation products produced by *Saccharopolyspora spinosa* including those synthetically derived thereof including various salt forms. The natural spinosyns are often referred to as spinosyn A, spinosyn B, spinosyn C, spinosyn D, spinosyn E etc.

The structure of the spinosyns can be illustrated by the general formula (2A) and (2B)

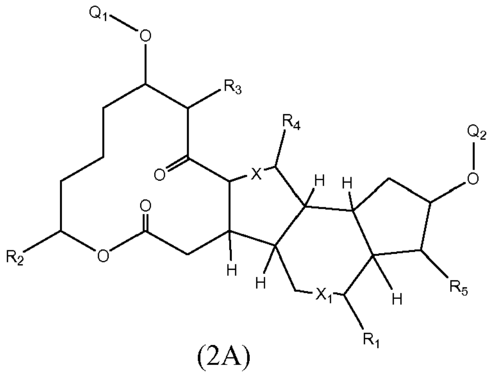
(2A)

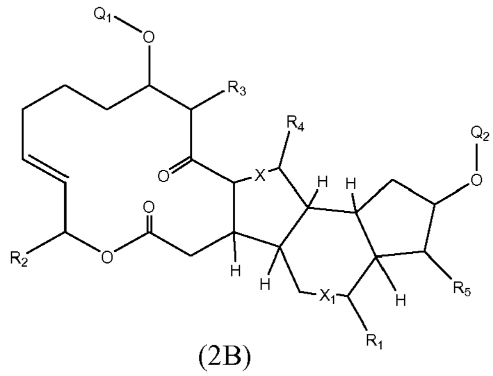
(2B)

wherein X and $X_1$ represents a single or double bond or an epoixide unit; $Q_1$ and $Q_2$ represents an optionally substituted sugar or aminosugar unit or H; $R_1$, $R_2$, $R_3$ and $R_4$ represents such substituents as H, alkyl, alkenyl, cycloalkyl, alkylcarbonyl, alkylamino or alkylhydroxylamino, with such groups optionally being substituted with e.g. halogen atoms, hydroxy and alkoxy groups; $R_5$ represents such groups as H, OH, alkoxy or carbonyl.

Spinosyn compounds are, for example, known from United States patents nos. 5,496,931; US 5,539,089; US 5,670,364 and US 6,001,981 and PCT application nos. WO 97/00265-A1, WO 2002/077004-A1, WO 2002/077005-A1 and WO 2001/019840-A1. The spinosyns are usually mixtures of several major components. A commercially available spinosyn is the compound Spinosad which is a mixture of spinosyn A and spinosyn D. A more recent spinosyn is Spinetoram synthetically prepared from the natural spinosyns, also a mixture of two major components. When appropriate, the spinosyns also include various salt forms thereof.

The compound Piperazine and its salts are known to control e.g. ascarids (large roundworms) and hookworms in animals such as dogs, cats, cattle, horses and poultry. Various salts forms, both mono-and di-salts, include Piperazine adipate, Piperazine hydrochloride, Piperazine sulfate, Piperazine citrate and Piperazine phosphate.

Among preferred Glutamate- or GABA-gated chloride channel agonist pesticides according to the invention are pesticidal active avermectins, milbemycines and spinosyns. Among preferred avermectins are Abamectin, Aversectin C, Doramectin, Emamectin, Eprinomectin, Ivermectin, Selamectin and salts thereof, and especially selected among Abamectin, Aversectin C, Ivermectin and Emamectin-benzoate with Abamectin being the most preferred choice. Among preferred milbemycines are Milbemectin, Milbemycin oxime, Moxidectin, Lepimectin, Nemadectin and salts thereof. The preferred spinosyns are Spinosad and Spinetoram. For use in crop protection the preferred Glutamate- or GABA-gated chloride channel agonist pesticide is selected among Abamectin, Aversectin C, Emamectin, Milbemectin, Spinosad and Spinetoram and salts thereof, whereas for use in the control of pests in or on humans or animals the preferred pesticide is selected among Abamectin, Doramectin, Emamectin, Eprinomectin, Ivermectin, Selamectin, Milbemycin oxime, Moxidectin, Lepimectin, Nemadectin, Spinosad and Piperazine and salts thereof.

It is to be understood that the pesticides useful according to the present invention does not necessarily need to have the Glutamate- or GABA-gated chloride channel agonistic effect as its primary mode of action. Spinosad as an example is believed to have an effect on both the GABA-gated chloride channel as well as targeting the nicotinic acetylcholine receptor (see for example PCT application no.
WO 01/70028-A1, especially p. 8, 1. 27). Thus, the primary requirement for a suitable pesticidal compound according to the present invention is that it interferes agonistically with the function of the Glutamate- or GABA-gated chloride channel.

The Glutamate- or GABA-gated chloride channel agonist pesticides according to the invention may be applied in the form of a pharmacologically or agriculturally acceptable salt, analog or combination thereof. Salts of the pesticides may be prepared using standard procedures known to those skilled in the art of synthetic organic chemistry. For example, acid addition salts are prepared from the free base (typically wherein the neutral form of the pesticide has a neutral amino group) using conventional means, involving reaction with a suitable acid. Generally, the base form of the drug is dissolved in an organic solvent such as alcohols, ethers, acetonitrile and the like and the acid is added thereto. The resulting salt either precipitates or may be brought out of solution by addition of a less polar solvent. Suitable acids for preparing acid addition salts include both organic acids, e.g., acetic acid, propionic acid, glycolic acid, pyruvic acid, oxalic acid, malic acid, malonic acid, succinic acid, maleic acid, fumaric acid, tartaric acid, citric acid, benzoic acid, cinnamic acid, mandelic acid, methanesulfonic acid, ethanesulfonic acid, p-toluenesulfonic acid, benzenesulfonic acid, salicylic acid, and the like, as well as inorganic acids, e.g., hydrochloric acid, hydrobromic acid, sulfuric acid, nitric acid, phosphoric acid, and the like. An acid addition salt may be reconverted to the free base by treatment with a suitable

base. Preparation of basic salts of acid moieties which may be present (e.g., carboxylic acid groups) are prepared in a similar manner using a pharmaceutically or agriculturally acceptable base such as sodium hydroxide, potassium hydroxide, ammonium hydroxide, calcium hydroxide, magnesium hydroxide, trimethylamine, or the like.

Among long chain alcohols are aliphatic alcohols and mixtures thereof, which may be linear or branched and optionally comprise one or more unsaturated bonds (both double and triple bonds), preferably none or one double bond, and may be selected among alcohols having 8 or more carbon atoms in their backbone structure (C8 or higher) and are suitably selected among C8-C30 alcohols, preferably C9-C26 alcohols, more preferably C10-C22 alcohols and most preferably C12-C20 alcohols, all of which the alcohol group(s) may be positioned at any of the carbon atoms able to carry the hydroxy group, i.e. the long chain alcohol may be selected among primary, secondary or tertiary alcohols, with primary alcohols being preferred. Although long chain mono alcohols are preferred, long chain alcohols carrying more than one hydroxy group may also be used, e.g. diols, triols tetraols etc.. For ease of preparing compositions useful according to the invention, long chain alcohols that are liquids at ambient temperatures are preferred, but solid long chain alcohols may also be used.

Long chain alcohols suitable according to the invention include 1-octanol, 1-decanol, 1-undecanol, 1-dodecanol, 1-tetradecanol, 2-decanol, 2-octanol, nonanol, 2-undecanol, 2-tetradecanol, 1-hexadecanol, 1-heptadecanol, phytol and farnesol. Preferred long chain alcohols are 1-dodecanol, 1-tetradecanol, 1-hexadecanol, 1-octadecanol and phytol and mixtures thereof, with phytol being especially preferred.

The Animals to be treated in accordance with the present invention includes, e.g. domestic animals (livestock and companion). The environs for the animals include farmyard structures, dairy sheds, stables, poultry sheds, pig sties, dog and cat kennels and houses where dogs and cats are kept. Animals on which the compositions can be applied to control pests, e.g. pathogenic endo- and ectoparasites, include productive animals, breeding animals, zoo animals, pets as well as laboratory and experimental animals, such as mice, rats, guinea-pigs, golden hamsters, dogs, cats, cattle, horses, sheep, pigs, goats, camels, water buffalo, donkeys, rabbits, fallow deer and reindeer, fur-bearing animals such as mink, chinchilla and raccoon, birds such as hens, geese, turkeys and ducks as well as fresh- and salt-water fish. The fish include food fish, cultivated fish, aquarium fish and ornamental fish of all ages which live in fresh water, sea water and pond water. The food fish and cultivated fish include, for example, carp, eel, trout, whitefish, salmon, bream, roach, rudd, chub, flounder, sole, plaice, saithe, wrasse, turbot, halibut, Japanese yellowtail (*Seriola quinqueradiata*), Japanese eel (*Anguilla japonica*), red sea bream (*Pagurus major*), sea bass (*Dicentrarchus labrax*), grey mullet (*Mugilus cephalus*), arctic char (*Salvelinus alpinus*), pompano, giltbread sea bream (*Sparus auratus*), Tilapia spp., chichlid species, such as, for example, plagioscion and channel catfish. The use according to the invention is especially suitable for breeding salmon, i.e. all members of the family of Salmonidae, especially those of the subfamily Salmonini and preferably the following species: Atlantic salmon (*Salmon salar*), brown or sea trout (*Salmon trutta*), rainbow trout (*Salmon gairdneri*); as well as the Pacific salmon (Oncorhynchus): *Oncorhynchus gorbuscha, Oncorhynchus keta, Oncorhynchus nekra, Oncorhynchus kisutch, Oncorhynchus tshawytscha* and *Oncorhynchus mason;* also included, however, are the species modified by breeding, e.g. *Salmo clarkia.*

By controlling the pathogenic endoparasites and ectoparasites the intention is to reduce disease, mortality and reductions in yield, so that the use of the compositions according to the invention enables more economical and simpler animal keeping.

According to the invention, it is possible to treat and protect all plants including parts of plants against agricultural pests. Plants are to be understood as meaning all plants and plant populations such as desired and undesired wild plants or crop plants (including naturally occurring crop plants). Parts of plants are to be understood as meaning all above-ground and below-ground parts and organs of plants, such as shoot, leaf, flower and root, examples which may be mentioned being leaves, needles, stems, trunks, flowers, fruit-bodies, fruits and seeds and also roots, tubers and rhizomes. Parts of plants also include harvested plants and vegetative and generative plant propagation material, for example seedlings, tubers, rhizomes, cuttings and seeds (including stored seeds).

The pesticidal composition of the present invention may be used for the protection of beneficial crops against agricultural pests, such crops include cereals, such as wheat, barley, rye, oats, rice, maize and sorghum; beet, such as sugar beet and fodder beet; fruit, e.g. pomes, stone fruit and soft fruit, such as apples, pears, plums, peaches, almonds, cherries and berries, e.g. strawberries, raspberries and blackberries; leguminous plants, such as beans, lentils, peas and soybeans; oil plants, such as rape, mustard, poppy, olives, sunflowers, coconut, castor oil, cocoa and groundnuts; cucurbitaceae, such as marrows, cucumbers and melons; fiber plants, such as cotton, flax, hemp and jute; citrus fruits, such as oranges, lemons, grapefruit and mandarins; vegetables, such as spinach, lettuce, asparagus, cabbages, carrots, onions, tomatoes, potatoes and paprika; lauraceae, such as avocado, cinnamon and camphor; and tobacco, nuts, coffee, aubergines, sugar cane, tea, pepper, vines, hops, bananas, natural rubber plants and ornamentals; as well as seeds of such crops. Within the scope of this invention such crops and seeds further comprise those that are resistant, either by transgenic means or selected by classical means, to pesticidal active ingredients and/or those that are resistant to certain pests, for example *Bacillus thuringiensis* (Bt) pest-resistant crops.

By the term "pest" as used herein is meant invertebrates such as insects, nematodes, trematodes, crustaceans

and arachnids.

The compositions according to the invention have a good plant tolerance and favorable toxicity toward warm blooded animals and are suitable for combating human and animal pests, in particular insects, arachnids and nematodes, particularly preferably for combating pests, and their development stages, which occur in agriculture, in forests, in the protection of stored products, including plant seeds, and materials and from the hygiene sector, as well as for protection of humans and animals against endo- and ecto-parasites, with use in agriculture and animal health being most preferred. They are active against normally sensitive and resistant types and against all or individual development stages. The above-mentioned pests include:

From the order of the Isopoda, for example *Oniscus asellus, Armadillidium vulgare* and *Porcellio scaber.* From the order of the Diplopoda, for example *Blaniulus guttulatus.* From the order of the Chilopoda, for example *Geophilus carpophagus* and Scutigera spp. From the order of the Symphyla, for example *Scutigerella immaculata.* From the order of the Thysanura, for example *Lepisma saccharina.* From the order of the Collembola, for example *Onychiurus armatus.* From the order of the Orthoptera, for example *Blatta orientalis, Periplaneta americana, Leucophaea maderae, Blatella germanica, Acheta domesticus,* Gryllotalpa spp., *Locusta migratoria migratorioides, Melanoplus differentialis* and *Schistocerca gregaria.* From the order of the Astigmata, for example *Otodectus cynotis* and *Notoedres cati.* From the order of the Dermaptera, for example *Forficula auricularia.* From the order of the Isoptera, for example *Reticulitermes* spp. From the order of the Anoplura, for example *Phylloera vastatrix,* Pemphigus spp., *Pediculus humanus corporis,* Solenopotes spp., Pthirus spp., Haematopinus spp. and Linognathus spp. From the order of the Mallophaga, for example Trimenopon spp., Menopon spp., Ecomenacanthus spp., Menacanthus spp., Trichodectes spp., Felicola spp., Damalinea spp., and Bovicola spp. From the order of the Thysanoptera, for example *Hercinothrips femoralis* and *Thrips tabaci.* From the order of the Heteroptera, for example Eurygaster spp., *Dysdercus intermedius, Piesma quadratum, Cimex lectularius, Rhodnius prolixus* and Triatoma spp. From the order of the Hemiptera, for example *Aleurodes brassicae, Bemisia tabaci, Trialeurodes vaporariorum, Aphis gossypii, Brevicoryne brassicae, Cryptomyzus ribis, Doralis fabae, Doralis pomi, Dysdercus cingulatus, cae, Cryptomyzus ribis, Doralis fabae, Doralis pomi, Dysdercus cingulatus, Eriosoma Lanigerum, Hyalopterus arundinis, Macrosiphum avenae,* Myzus spp., *Phorodon humuli, Rhopalosiphum padi,* Empoasca spp., *Euscelus bilobatus, Nephotettix cincticeps, Lecanium corni, Saissetia oleae, Laodelphax striatellus, Nilaparvata lugens, Aonidiella aurantii, Aspidiotus hederae,* Pseudococcus spp. and Psylla spp. From the order of the Lepidoptera, for example *Pectinophora gossypiella, Bupalus piniarius, Cheimatobia brumata, Lithocol-letis blancardella, Hyponomeuta padella, Plutella maculipennis, Malacosoma neustria, Euproctis chrysorrhoea,* Lymantria spp., *Bucculatrix thurberiella, Phyllocnistis citrella,* Agrotis spp., Euxoa spp., Feltia spp., *Earias insulana,* Heliothis spp., *Laphygma exigua, Mamestra brassicae, Panolis flammea, Prodenia litura,* Spodoptera spp., *Trichoplusia ni, Carpocapsa pomonella,* Pieris spp., Chilo spp., *Pyrausta nubilialis, Ephestia kuehniella, Galleria mel-lonella, Cacoecia podana, Capua reticulana, Choristoneura fumiferana, Clysia ambiguella, Homona magnanima* and *Tortrix viridana.* From the order of the Coleoptera, for example *Anobium punctatum, Rhizopertha dominica, Bruchidius obtectus, Acanthoscelides obtectus, Hylotrupes bajulus, Agelastica alni, Leptinotarsa decemlineata, Phaedon cochleariae,* Diabrotica spp., *Psylliodes chrysocephala, Epilachna varivestis,* Atomaria spp., *Oryzaephilus surinamensis,* Anthonomus spp., Sitophilus spp., *Otiorrhynchus sulcatus, Cosmopolites sordidus, Ceuthorrhynchus assimilis, Hypera postica,* Dermestes spp., Trogoderma spp., Anthrenus spp., Attagenus spp., Lyctus spp., *Meligethes aeneus,* Ptinus spp., *Niptus hololeucus, Gibbium psylloides,* Tribolium spp., *Tenebrio molitor,* Agriotes spp., Conoderus spp., *Melolontha melolontha, Amphimallon solstitialis* and *Costelytra zealandica.* From the order of the Hymenoptera, for example Camponotus spp., Diprion spp., Formicidae spp., Hoplocampa spp. Lasius spp., Myrmecia spp., Solenopsis spp. and Vespa spp. From the order of the Diptera, for example Aedes spp., Anopheles spp., Auchmeromyia spp., Cordylobia spp., Cochliomyia spp., Chrysops spp., Culex spp., Glossina spp., *Drosophila melanogaster,* Musca spp., Fannia spp., *Calliphora erythrocephala,* Lucilia spp., Chrysomyia spp., Cuterebra spp., Gasterophilus spp., Hypobosca spp., Stomoxys spp., Oestrus spp., Oesteromyia spp., Oedemagena spp., Hydrotaea spp., Muscina spp., Haematobosca spp., Haematobia spp., Hypoderma spp., Rhinoestrus spp., Melophagus spp., Hippobosca spp., Sarcophaga spp., Wohlfartia spp., Tabanus spp., Tannia spp., *Bibio hortulanus, Oscinella frit,* Phorbia spp., *Pegomyia hyoscyami, Ceratitis capitata, Dacus oleae* and *Tipula paludosa.* From the order of the Siphonaptera, for example *Xenopsylla cheopis,* Ctenocephalides spp., Echidnophaga spp. and Ceratophyllus spp. From the class of the Arachnida, for example Araneae spp., Amblyomma spp., , Boophilus spp., Demodex spp., Hyalomma spp., Ixodes spp., Sarcoptidae spp., Psoroptidae spp., Rhipicephalus spp. and Dermacentor spp. From the order Phthiraptera, for example the families Boopidae, Haematopinidae, Hoplopleuridae, Linognathidae, Menoponidae, Pediculidae, Philopteridae, and Trichodectidae.

The pathogenic endoparasites include nematodes and Acantocephala, in particular: From the subclass of the Monogenea, e.g. Gyrodactylus spp., Dactylogyrus spp., Polystoma spp. From the order of the Enoplida e.g.: Trichuris

spp., Capillaria spp., Trichomosoides spp., Trichinella spp. From the order of the Rhabditia e.g.: Micronema spp., Strongyloides spp. From the order of the Strongylida e.g.: Stronylus spp., Triodontophorus spp., Oesophagodontus spp., Trichonema spp., Gyalocephalus spp., Cylindropharynx spp., Poteriostomum spp., Cyclococercus spp., Cylicostephanus spp., Oesophagostomum spp., Chabertia spp., Stephanurus spp., Ancylostoma spp., Uncinaria spp., Bunostomum spp., Globocephalus spp., Syngamus spp., Cyathostoma spp., Metastrongylus spp., Dictyocaulus spp., Muellerius spp., Geigeria spp., Protostrongylus spp., Neostrongylus spp., Cystocaulus spp., Pneumostrongylus spp., Spicocaulus spp., Elaphostrongylus spp., Parelaphostrongylus spp., Crenosoma spp., Paracrenosoma spp., Angiostrongylus spp., Aelurostrongylus spp., Filaroides spp., Parafilaroides spp., Trichostrongylus spp., Haemonchus spp., Ostertagia spp., Marshallagia spp., Cooperia spp., Nematodirus spp., Hyostrongylus spp., Obeliscoides spp., Amidostomum spp., Ollulanus spp. From the order of the Oxyurida e.g.: Oxyuris spp., Enterobius spp., Passalurus spp., Syphacia spp., Aspiculuris spp., Heterakis spp. From the order of the Ascaridia e.g.: Ascaris spp., Toxascaris spp., Toxocara spp., Parascaris spp., Anisakis spp., Ascaridia spp. From the order of the Spirurida e.g.: Dirofilaria spp., Onchocerca spp., Wuchereria spp., Gnathostoma spp., Physaloptera spp., Thelazia spp., Gongylonema spp., Habronema spp., Parabronema spp., Draschia spp., Dracunculus spp., Parafilaria spp., Brugia spp. From the order of the Filariida e.g.: Stephanofilaria spp.,Litomosoides spp. From the order of Gigantorhynchida e.g.: Filicollis spp., Moniliformis spp., Macracanthorhynchus spp., Prosthenorchis spp. Combinations of at least one compound A with the at least one compound B are particularly suitable for use against pests from the genera Aculus, Alabama, Anticarsia, Hemisia, Choristoneura, Epilachna, Frankliniella, Laspeyresia, Leptinotarsa, Liriomyza, Lymantria, Keiferia, Panonchus, Phtorimaea, Phyllocnistis, Phyllocoptruta, Pieris, Plutella, Polyphagotarsonemus, Pseudoplusia, Psylla, Sciryhothrips, Spodoptera, Tetranychus, Trialeurodes, Trichoplusia, for example in cotton, soya, vegetable, fruit, citrus, wine and maize crops.

It is also possible to control various types of spider mites, such as the fruit tree spider mite (*Panonychus ulmi*), the citrus spider mite (*Panonychus citri*) and the common spider mite (*Tetranychus urticae*); and false spider mites such as *Brevipalpus* mites (e.g. *Brevipalpus chilensis*).

Combinations of at least one compound A with the at least one compound B are particularly suitable for use against human and animal pests from the genera: Ancylostoma (e.g. *A. braziliens, A. caninum, A. duodenale, A. martinezi, A. tubaeforme*), Angiostrongylus (e.g. *A. cantonensis, A. chabaudi, A. daskalovi, A. dujardini, A. sciuri, A. vasorum*), Anoplocephala (e.g. *A. magna, A. perfoliata*), Archeostrongylus (*A. italicus*), Ascaridia (e.g. *A. alectoris, A. columbae, A. compar, A. cylindrica, A. dissimilis, A. galli, A. lineata, A. magnipapilla, A. numidae, A. perspicillum*), Ascaris (e.g. *A. castoris, A. lumbricoides, A. mosgovoyi, A. ovis, A. spalacis, A. suum*), Boophilus (e.g. *B. annulatus, B. microplus*), Bovicola (e.g. *B. alpinus, B bovis, B. caprae, B. limbatus, B. longicornis, B. ovis, B. tarandi, B. tibialis*), Brugia (e.g. *B. malayi*), Bunostomum (e.g. *B. phlebotomum, B. trigonocephalum*), Caligus (e.g. *C. lacustris*), Capillaria (e.g. *C. aerophila, C.h epatica, C. philippinensis*), Chabertia (e.g. *C. ovina),* Chorioptes (e.g. *C. bovis*), Cooperia (e.g. *C. asamati, C. bisonis, C. curticei, C. mcmasteri, C. oncophora, C. pectinata, C. punctata, C. surnabada, C. zurnabada*), Coronocyclus (e.g. *C. coronatus, C. labiatus, C. labratus, C. sagittatus*), Craterostomum (e.g. *C. acuticaudatum*), Ctenocephalides (e.g. *C. canis, C. felis*), Cyathostomum (e.g. *C. alveatum, C. catinatum, C. pateratum, C. tetracanthum*), Cylicocyclus (e.g. *C. adersi, C. auriculatus, C. ashworthi, C. brevicapsulatus, C. elongatus, C. insigne, C. leptostomum, C. nassatus, C. radiatus, C. triramosus, C. ultrajectinus*), Cylicodontophorus (e.g. *C. bicoronatus*), Cylicostephanus (e.g. *C. asymetricus, C. bidentatus, C. calicatus, C. goldi, C. hybridus, C. longibursatus, C. minutus, C. poculatus*), Damalinia (e.g. *D. bovis*), Demodex (e.g. *D. brevis, D. canis, D. folliculorum, D. gatoi*), Dictyocaulus (e.g. *D. arnfieldi, D. capreolus, D. capreolus, D. eckerti, D. filarial, D. murmanensis, D. noerneri, D. viviparus*), Dipylidium (e.g. *D. caninum, D. oerleyi, D. porimamillanum, D. sexcoronatum*), Dirofilaria (e.g. *D. immitis, D. repens, D. ursi*), Echinococcus (e.g. *E. granulosus, E. multilocularis*), Fasciola (e.g *F. gigantica, F. hepatica*), Felicola (e.g. *F. inaequalis, F. subrostratus*), Gaigeria (e.g. *G. pachyscelis*), Gastrophilus (e.g. *G. haemorrhoidalis, G. inermis, G. intestinalis, G. nasalis, G. nigricornis, G. pecorum*), Gyalocephalus (e.g. *G. capitatus),* Habronema (e.g. *H. majus, H. microstoma, H. muscae*), Haematobia (e.g. *H. irritans, H. titillans*), Haematopinus (e.g. *H. apri, H. asini, H. eurysternus, H. suis, H. tuberculatus*), Haemonchus (e.g. *H. contortus, H. placei*), Heterakis (e.g., *H. altaica, H. crexi, H. dispar, H. gallinarum, H. isolonche, H. macroura, H. monticelliana, H. spumosa, H. tenuicauda, H. vesicularis*), Hyostrongylus (e.g. *H. rubidus*), Hypoderma (e.g. *H. actaeon, H. bovis, H. diana, H. lineatum, H. tarandi*), Knemidokoptes (e.g. *K. laevis, K. mutans*), Linognathus (e.g. *L. africanus, L. ovillus, L. pedalis, L. setosus, L. stenopsis, L. vituli*), Lucilia (e.g. *L. ampullacea, L. bufonivora, L. caesar, L. cuprina, L. illustris, L. magnicornis, L. pilosiventris, L. regalis, L. richardsi, L. sericata, L. silvarum*), Mesocestoides (e.g. *M. alaudae, M. ambiguus, M. angustatus, M. canislagopodis, M. imbutiformis, M. leptothylacus, M. lineatus, M. litteratus, M. melesi, M. perlatus, M. petroli, M. Zacharovae*), Metastrongylus (e.g. *M. apri, M. asymmetricus, M. confusus, M. elongatus, M. pudendotectus, M. pulmonalis, M. salmi*), Nematodirus (e.g. *N. abnormalis, N. aspinosus, N. battus, N. chabaudi, N. davtiani, N. europaeus, N. filicollis, N. helvetianus, N. hugonnetae, N. ibicis, N. lanceolatus, N. oiratianus, N. roscidus, N. rupicaprae, N. skrjabini, N. spathiger*), Notoedres (e.g. *N. cati),* Oesophagostomum (e.g. *O. bifurcum, O. cervi, O. columbianum, O. dentatum, O. longicaudum, O. quadrispinulatum, O. radiatum, O. sikae, O. venulosum*), Oestrus (e.g. *O. caucasicus, O. ovis*), Onchocerca (e.g. *O. cervicalis, O. flexuosa, O. garmsi, O. gutturosa, O. jakutensis, O. lienalis, O. lupi, O. reticulate, O. skrjabini, O. volvulus*), Ostertagia (e.g. *O. antipini, O. arctica, O.*

*buriatica, O. circumcinta, O. dahurica, O. drozdzi, O. gruehneri, O. kolchida, O. lasensis, O. leptospicularis, O. lyrata, O. mossi, O. murmani, O. nemorhaedi, O. orloffi, O. ostertagi, O. skrjabini, O. trifurcata, O. volgaensis*), Otodectes (e.g. *O. cynotis*), Oxyuris (e.g. *O. acutissima, O. equi, O. flagellum, O. paradoxa*), Paranoplocephala (e.g. *P. mamillana*), Parapoteriostomum (e.g. *P. euproctus, P. mettami*), Parascaris (e.g. *P. equorom*), Petrovinema (e.g. *P. skrjabini, P. poculatum*), Poteriostomum (e.g. *P. imparidentatum, P. ratzii*), Protostrongylus (e.g. *P. brevispiculatum, P. commutatus, P. cuniculorum, P. hobmaieri, P. kamenskyi, P. muraschkinzewi, P, pulmonalis, P. raillieti, P. rufescens, P. rupicaprae, P. tauricus, P. terminalis*), Psoroptes (e.g. *P. bovis, P. ovis*), Sarcoptes (e.g. *S. scabiei*), Solenopotes (e.g. *S. burmeisteri, S. capillatus, S. caprioli, S. tarandi*), Stephanurus (e.g. *S. dentatus*), Strongyloides (e.g. *S. avium, S. bufonis, S. canis, S. darevskyi, S. martis, S. mascomai, S. mirzai. S. mustelorum, S. myopotami, S. natricis, S. ophiusensis, S. papillosus, S. putorii, S. rasomi, S. ratti, S. rostombekowi, S. spiralis, S. stercoralis, S. suis, S. turkmenica, S. vulpis, S. westeri*), Strongylus (e.g. *S. edentatus, S. equinus, S. vulgaris*), Taenia (e.g. *T. brauni, T. cervi, T. crassiceps, T. endothoracica, T. hydatigena, T. krabbei, T. krepkogorski, T. laticollis, T. martis, T. multiceps, T. mustelae, T. ovis, T. parenchymatosa, T. parva, T. parviuncinata, T. pisiformis, T. polyacantha, T. rilevi, T. saginata, T. secunda, T. serialis, T. smythi, T. solium, T. taeniaeformis*), Thelazia (e.g *T. callipaeda, T. cholodkowskii, T. gulosa, T. lacrymalis, T. papillosa, T. rhodesi, T. skrjabini*), Toxascaris (e.g. *T. leonina*), Toxocara (e.g. *T. canis, T. cati, T. mystax*), Trichodectes (e.g. *T. canis, T. melis, T. pingui*), Trichostrongylus (e.g. *T. andreevi, T. askivali, T. axei, T. brevis, T. calcaratus, T. capricola, T. colubriformis, T. lerouxi, T. longispicularis, T. medius, T. ostertagiaeformis, T. pietersei, T. probolurus, T. retortaeformis, T. skrjabini, T. suis, T. tenuis, T. ventricosus, T. vitrinus*), Trichuris (e.g. *T. arvicolae, T. capreoli, T. cervicaprae, T. discolor, T. globulosa, T. guevarai, T. infundibulus, T. lani, T. leporis, T. muris, T. myocastoris, T. opaca, T. ovis, T. skrjabini, T. spalacis, T. suis, T. sylvilagi, T. tarandi, T. trichiura, T. vulpis*), Triodontophorus (e.g. *T. brevicauda, T. brochotrilobulatus, T. minor, T. nipponicus, T. serratus, T. tenuicollis*), Uncinaria (e.g. *U. criniformis, U. stenocephala*) and Wuchereria (e.g. *W. bancrofti*).

As part of the animal kingdom are fish, and combinations of at least one compound A with the at least one compound B are also suitable for use for combating fish parasites, and in particular fish-parasitising crustaceans. Among these are the Copepodae (cyclops; fish-lice) with the genera Ergasilus, Bromolochus, Chondracaushus, Caligus (e.g. *C. curtus, C. elongatus, C. orientalis, C. teres, C. labaracis*), Lepeophtheirus (e.g. *L. salmonis, L. cuneifer, L. pectoralis, L. hippoglssus*), Elythrophora, Dichelestinum, Lamproglenz, Hatschekia, Legosphilus, Symphodus, Ceudrolasus, Pseudocycmus, Lernaea, Lernaeocera, Pennella, Achthares, Basanistes, Salmincola, Brachiella, Epibrachiella, Pseudotracheliastes, and the families Ergasilidae, Bromolochidae, Chondracanthidae, Calijidae, Dichelestiidae, Gyrodactylidae (e.g Gyrodactylus spp. such as *Gyrodactylus cotti, Gyrodactylus salaries, Gyrodactylus truttae*), Philichthyidae, Pseudocycnidae, Lernaeidae, Lernaepodidae, Sphyriidae, Cecropidae, as well as the Branchiuriae (carp lice) with the families Argulidae and the genera Argulus spec, as well as the Cirripediae and *Ceratothoa gaudichaudii.*

A pronounced effect of the Glutamate- or GABA-gated chloride channel agonist pesticides when used in combination with the at least one compound B is the increased knock-down-effect on pests when exposed to combination products according to the invention (i.e. the pests are rapidly paralyzed) which is highly beneficial in pest control. Even those pests which may not receive a lethal dose through a very brief contact will, nevertheless, be sufficiently immobilized long enough for them to become either easy prey to predators, such as birds, or to suffer death by desiccation.

Compositions containing the compound(s) A and the compound(s) B may be employed in any conventional form, for example, in the form of a twin pack, or as an emulsifiable concentrate, an oil-in-water emulsion, soluble concentrate, suspension concentrate, microemulsion, wettable powder, ready-to-spray solution, soluble granule, water-dispersible granule, creams, soaps, waxes, tablets or pour-on-formulations. Such compositions can be formulated using adjuvants and formulation techniques that are known in the art for individually formulating the compounds A and B. For example, the compounds A and B may be mixed together, optionally with other formulating ingredients.

The compositions may contain a diluent, which may be added during the formulation process, after the formulation process (e.g. by the user - a farmer or custom applicator), or both. The term diluent includes all liquid and solid agriculturally or pharmaceutically (including veterinary medicines) acceptable material-including carriers which may be added to the compound A or compound B to bring them in a suitable application or commercial form. Examples of suitable solid diluents or carriers are aluminium silicate, talc, calcined magnesia, kieselguhr, tricalcium phosphate, powdered cork, absorbent carbon black, chalk silica, and clays such as kaolin and bentonite. Examples of suitable liquid diluents used alone or in combination include water, organic solvents (e.g. acetophenone, cyclohexanone, isophorone, toluene, xylene, petroleum distillates, pyrrolidones, alcohols, glycols, amines, acids and esters), and mineral, animal, and vegetable oils as well as derivatives thereof such as fatty alcohols, fatty acids and ester thereof. The compositions may also contain surfactants, protective colloids, thickeners, penetrating agents, stabilizers, sequestering agents, anti-caking agents, coloring agents, corrosion inhibitors, and dispersants such as lignosulfite waste liquors and methylcellulose. The term surfactant, as used herein, means an agriculturally or pharmaceutically acceptable material which imparts emulsifiability, stability, spreading, wetting, dispersibility or other surface-modifying properties. Examples of suitable surfactants include non-ionic, anionic, cationic and ampholytic types such as lignin sulfonates, fatty acid sulfonates (e.g. lauryl sulfonate), the condensation product of formaldehyde with naphthalene sulfonate, alkylarylsulfonates,

ethoxylated alkylphenols, and ethoxylated fatty alcohols. Other known surfactants that have been used with insecticides, acaricides, nematicides or pharmaceuticals (including veterinary medicines) are also acceptable.

When mixed with additional components, the composition typically contains about 0.001 to about 90% by weight of compound(s) A and about 0.001 to about 90% by weight of compound(s) B, about 0 to about 30% agriculturally/pharmaceutically acceptable surfactants, and about 10 to 99.99% solid or liquid diluents. The compositions may additionally contain other additives known in the art, such as pigments, thickeners and the like.

The compositions may be applied in various combinations of the compound(s) A and compound(s) B. For example, they may be applied as a single "ready-mix" form, or in a combined spray mixture composed from separate formulations of the compounds A and B, e.g. a "tank-mix" form. Thus, to be used in combination, it is not necessary that the compound(s) A and B, be applied in a physically combined form, or even at the same time, i.e. the compounds may be applied in a separately and/or sequentially application, provided that the application of the second compound occurs within a reasonable period of time from the application of the first compound. The combination effect results so long as the compounds A and B are present at the same time, regardless of when they were applied. Thus, for instance, a physical combination of the compounds could be applied, or one could be applied earlier than the other so long as the earlier-applied ingredient is still present on the pest to be controlled, on the plant or in the soil surrounding the plant infested or susceptible of being infested with the pest to be controlled when the second ingredient is applied, and so long as the weight ratio of available ingredients A and B falls within that disclosed and claimed herein. The order of applying the individual compounds A and B is not essential.

Rates of application of the composition will vary according to prevailing conditions such as targeted pests, degree of infestation, weather conditions, soil conditions, plant species to be treated, animal to be treated, mode of application, and application time. Compositions containing the compounds A and B may be applied in the manner which they are formulated, as discussed above. For example, they may be applied as sprays, such as water-dispersible concentrates, wettable powders, water-dispersible granules or as creams, soaps, waxes, tablets, solutions and pour-on-formulations. The compositions may also be applied topically, orally, by stomach intubation or by injection, especially when applied on domestic animals such as sheep, pigs, cattle, horses, goats, dogs, cats and poultry for the control of internal and/or external harmful pests. Solutions for use on the skin are trickled on, spread on, rubbed in, sprinkled on or sprayed on. Pour-on formulations are poured or sprayed onto limited areas of the skin and penetrating the skin and acting systemically. Gels are applied to or spread on the skin or introduced into body cavities. Oral solutions are administered directly or following a prior dilution to the use concentration.

The treatment of plants and parts of plants according to the invention may be carried out directly or by action on their environment (e.g. soil application), habitat or storage area according to customary treatment methods, for example by dipping, spraying, evaporating, atomizing, broadcasting, brushing-on and, in the case of propagation material, in particular in the case of seeds, furthermore by one- or multi-layer coating.

The treatment of fish is effected either orally, for example via the feed, or by balneotherapy, for example a "medical bath" into which the fish are placed and in which they are kept for a period (minutes to several hours), for example in association with being moved from one rearing pool to another. In particular cases, the treatment can also be effected parenterally, for example by injection. Transient or permanent treatment may also take place of the habitat of the fish, for example in net cages, entire pond installations, aquaria, tanks or pools, in which the fish are kept.

The pesticidal composition may be obtained by replacing any amount of a pesticide with the synergist as long as the synergistic action is achieved, i.e. the pesticidal action of the composition is higher than the sum of pesticidal effects of each of the pesticide and the synergist when taken alone. In a preferred aspect of the invention between 5% and 97% by weight of pesticide is replaced by a synergistic amount of the synergist. For most pesticides the highest synergistic action is obtained by replacing between 20% and 90% by weight of pesticide by a synergistic amount of the synergist.

The weight ratio of compound(s) A to compound(s) B is selected to provide a synergistic pesticidal action, i.e. the compound(s) B is present in an activity enhancing amount with respect to compound(s) A. In general, the weight ratio of A:B ranges from about 20:1 to about 1:30, preferably 10:1 to 1:30, more preferably from about 1:1 to about 1:20, and even more preferably from about 1:1 to about 1:15. In particular are those ratios preferred where the compound(s) B is in excess of the compound(s) A, e.g. ranges from about 1:1.1 to about 1:30, more preferably from about 1:1.1 to about 1:20, and even more preferably from about 1:1.1 to about 1:15.

The weight ratio of A:B will depend on various factors such as the chemical nature of A and B, the mode of application, the harmful pests to be combated, the useful plant to be protected, the animal infested with harmful pests, the application time, etc.

An effective amount of compound(s) A and compound(s) B is any amount that has the ability to combat the harmful pests, e.g. an amount which is sufficient to cause a measurable reduction in the exposed pest population. When used in crop protection, e.g. by direct or soil application, effective aggregate combined amounts of the compounds A and B range from about 0.01 to about 2000 g/ha, preferably 0.1 to 1500 g/ha, more preferably 1-1000 g/ha, even more preferably 2-800 g/ha, and most preferably 2-200 g/ha. In the treatment of seeds, effective aggregate combined amounts

of the compounds A and B range between 0.001 and 20 g per kilogram of seed, preferably between 0.01 and 10 g per kilogram of seed.

When used in treatment of animals or humans against pests effective aggregate combined amounts of the compounds A and B range from about 0.01 to 1000 mg pr kg of animal or human bodyweight, preferably 0.1 to 100 mg pr kg of animal or human bodyweight.

Additional insecticides, acaricides and nematicides may also be added to the pesticidal composition provided that the additional insecticide/acaricide/nematicide does not interfere in a negative way with the synergistic relationship between the compounds A and B. The presence of the compound(s) B may also enhance the activity of such additional active ingredient(s). An additional insecticide, acaricide or nematicide may be utilized if broadening of the spectrum of control or preventing the build-up of resistance is desired. Suitable examples of such additional active compounds are: acephate, acetamiprid, acrinathrin, alanycarb, albendazole, aldicarb, alphamethrin, amitraz, azadirachtin, azinphos, azocyclotin, Bacillus thuringiensis, bendiocarb, benfuracarb, bensultap, bephenium, betacyfluthrin, bifenazate, bifenthrin, bistrifluron, BPMC, brofenprox, bromophos, brotianide, bufencarb, buprofezin, butamisole, butocarboxin, butylpyridaben, cadusafos, cambendazole, carbaryl, carbofuran, carbophenothion, carbosulfan, cartap, chloethocarb, chloroethoxyfos, chlorfenapyr, chlorofenvinphos, chlorofluazuron, chloromephos, chlorpyrifos, chromafenozide, cis-resmethrin, clocythrin, clofentezine, clorsulon, closantel, clothianidin, cyanophos, cycloprothrin, cyfluthrin, cyhalothrin, cyhexatin, cypermethrin, cyromazine, deltamethrin, demeton, diamphenethide, dibromosalan, dichlorophen, difenthiuron, diazinon, dichlofenthion, dichlorvos, dicliphos, dicrotophos, diethion, diethylcarbamazine, diflubenzuron, dimethoate, dimethylvinphos, dinotefuran, dioxathion, disulfoton, edifenphos, epsiprantel, esfenvalerate, ethiofencarb, ethion, ethiprole, ethofenprox, ethoprophos, etoxazole, etrimphos, febantel, fenamiphos, fenbendazole, fenzaquin, fenbutatin oxide, fenitrothion, fenobucarb, fenothiocarb, fenoxycarb, fenpropathrin, fenpyrad, fenpyroximate, fenthion, fenvalerate, fipronil, flonicamid, fluazinam, fluazuron, flubendazole, flucycloxuron, flucythrinate, flufenoxuron, flufenprox, fluvalinate, fonophos, formothion, fosthiazate, fubfenprox, furathiocarb, gamma-cyhalothrin, haloxon, heptenophos, hexaflumuron, hexachlorophene, hexythiazox, imidacloprid, indoxacarb, iprobenfos, isazophos, isofenphos, isoprocarb, isoxathion, lambda-cyhalothrin, levamisole, lufenuron, malathion, mebendazole, mecarbam, mevinphos, mesulfenphos, metaldehyde, methacrifos, methamidophos, methidathion, methiocarb, methomyl, methoxy-fenozide, methyridine, metolcarb, milbemectin, monocrotophos, morantel, naled, netobimin, niclopholan, niclosamide, nitenpyram, nitroxynil, omethoate, oxamyl, oxfendazole, oxibendazole, oxyclozanide, oxydemethon M, oxydeprofos, parathion A, parathion M, parbendazol, permethrin, phenothiazine, phenthoate, phorate, phosalone, phosmet, phosphamidon, phoxim, pirimicarb, pirimiphos, praziquantel, profenofos, promecarb, propaphos, propoxur, prothiofos, prothoate, pymetrozin, pyrachlophos, pyrantel, pyridaphenthion, pyresmethrin, pyrethrum, pyridaben, pyrimidifen, pyriproxifen, quinalphos, rafoxanide, rynaxypyr, salithion, sebufos, silafluofen, spirodiclofen, spiromesifen, spirotetratmat, sulfotep, sulprofos, tebufenozid, tebufenpyrad, tebupirimiphos, teflubenzuron, tefluthrin, temephos, terbam, terbufos, tetrachlorvinphos, tetramisole, thenium, thiabendazole, thiacloprid, thiafenox, thiamethoxam thiodicarb, thiofanox, thiomethon, thionazin, thiophanate, thuringiensin, tralomethrin, triarathen, triazophos, triazuron, trichlorfon, triclabendazole, triflumuron, trimethacarb, vamidothion, XMC, xylylcarb, zetamethrin.

Further, inclusion of other known active compounds, such as herbicides, fungicides, fertilisers or growth regulators, is also possible.

The additional ingredients used for the compositions in addition to the compounds A and the compounds B should be selected in order to avoid inadvertent reaction to the animal being treated such as skin irritation etc. The skilled person will appreciate how selecting suitable ingredients for such compositions. Such compositions will typically comprise a solvent or a carrier. The compositions may further comprise a colorant, which facilitates application of the compositions on the animals since the person applying the compositions easily can see where the composition already has been applied.

The ingredients used for veterinary or pharmaceutical compositions in addition to the compounds A and the compounds B should be pharmaceutically acceptable or acceptable according to veterinary standards as the skilled person within the area will appreciate. Such compositions will typically comprise a solvent or a carrier.

Generally speaking, a synergistic effect exists whenever the action of a combination of two chemicals is greater than the sum of the action of each of the chemicals alone. Therefore, a synergistic combination is a combination of chemical components having an action that is greater than the sum of the action of each chemical component alone, and a synergistically effective amount is an effective amount of a synergistic combination. Synergism can involve either 2 pesticides, or one pesticide plus a substance that is not by itself toxic to the pest, and such a substance is termed a synergist, i.e. a chemical that enhances the toxicity of a pesticide to a pest.

Well-known methods for determining whether synergy exists include the Colby method, the Tammes method and the Wadley method, all of which are described below. Any one of these methods may be used to determine if synergy exists between the compounds A and B. In the Colby method, also referred to as the Limpels method, the action to be expected E for a given active ingredient combination obeys the so-called Colby formula. According to Colby, the expected action of ingredients A+B using p+q ppm of active ingredient is:

$$E = X + Y - \frac{X \cdot Y}{100}$$

where ppm=milligrams of active ingredient (=a.i.) per liter of spray mixture X=% action by component A using p ppm of active ingredient Y=% action by component B using q ppm of active ingredient. If the ratio R defined as the action actually observed (O) divided by the expected action (E) is >1 then the action of the combination is superadditive, i.e. there is a synergistic effect. For a more detailed description of the Colby formula, see Colby, S. R. "Calculating synergistic and antagonistic responses of herbicide combination," Weeds, Vol. 15, pages 20-22; 1967; see also Limpel et al., Proc. NEWCC 16: 48-53 (1962).

The Tammes method uses a graphic representation to determine whether a synergistic effect exists. See "Isoboles, a graphic representation of synergism in pesticides," Netherlands Journal of Plant Pathology, 70 (1964) p. 73-80.

The Wadley method is based on comparison of an observed ED50 value (i.e. dose of a given compound or combination of compounds providing 50% pest control) obtained from experimental data using the dose response curves and an expected ED50 calculated theoretically from the formula:

$$ED50(A+B)_{exp} = \frac{a+b}{\frac{a}{ED50(A)_{obs}} + \frac{b}{ED50(B)_{obs}}}$$

wherein a and b are the weight ratios of compound A and B in the mixture and $EDSO_{obs}$ is the experimentally determined ED50 value obtained using the dose response curves for the individual compounds. The ratio $ED50(A+B)_{expected}/ED50(A+B)_{observed}$ expresses the factor of interaction (F) (synergy factor). In case of synergism, F is >1. The same formula applies when LD50 values are used, i.e. lethal dose, as well as EC50 values, i.e. effective concentration, and LC50 values, i.e. lethal concentration. For a more detailed description of the Wadley method, see Levi et al., EPPO-Bulletin 16, 1986, 651-657.

An alternative approach as mentioned by D.L. Richer (Pesticide Science, 1987, 19, 309-315, especially p. 313) to determine synergy is based on purely observed values rather than observed and theoretical calculated values as used in the previously mentioned methods. In this alternative method the effect of a given rate of the mixture A and B is compared with the effect of the same rate of each of A and B used alone. If synergism exists, the observed effect of the mixture will be greater than the observed effect of either component used alone:

$$E_{obs}(xA + yB) > E_{obs}(x+y)A, \text{ and } > E_{obs}(x+y)B$$

wherein x and y are the quantities of A and B in the mixture.

The documents specifically cited in the description are incorporated by reference into the description. The invention is illustrated by the following examples, which are provided for illustratory purposes and should not be construed as limiting for the invention:

## EXAMPLES

### Example 1

Ordinary EC formulations containing either 18 g/l Abamectin, 10 g/l Milbemectin, 17 g/l Emamectin (as its benzoate salt) or 180 g/l phytol were produced. In addition a blank formulation not containing any active ingredient or phytol was produced. Mixture formulations containing phytol and Abamectin, Milbemectin or Emamectin were produced and included in the *Tetranychus urticae* test as well.

Dilutions of the formulations were sprayed on bean plants (*Vicia faba*) in a spray cabinet and mites (*Tetranychus urticae*) were transferred to the plants after the leaf surfaces were dry. The degree of leaf damage was evaluated 7 days after the mites were placed on the plants, and ED50 values were calculated for the formulations, table 1. The ED50 values are based on % leaf damage.

**Table 1**

| ED50 values expected and observed (g ai and phytol per ha) for the *Tetranychus urticae* test on bean plants (*Vicia faba*). ED50 values are based on % leaf damage | | | |
|---|---|---|---|
| Formulations | $ED50_{obs}$ | ED50 exp | F (exp/obs) |
| Abamectin 18 g/l EC | 2.12 | - | - |
| Abamectin 18 g/l and phytol 180 g/l EC | 9.15 | 23.32 | 2.55 |
| Milbemectin 10 g/l EC | 0.94 | - | - |
| Milbemectin 10 g/l and phytol 100 g/l EC | 5.83 | 10.34 | 1.77 |
| Emamectin 17 g/l EC | 3.96 | - | - |
| Emamectin 17 g/l and phytol 170 g/l EC | 34.25 | 43.56 | 1.27 |

The formulations comprising phytol without any pesticide did not have any activity on the thrips. Therefore, accordingly, when calculating the expected ED50 values according to the Wadley method, the observed ED50 value for phytol was set at ∞.

The synergy factors (F) listed in table 1 for Abamectin, Milbemectin and Emamectin combined with phytol is well above 1. Synergy factors > 1 indicate the presence of synergism between the active ingredients and phytol.

**Example 2**

Ordinary EC formulations containing either 18 g/l Abamectin, 10 g/l Spinosad, 10 g/l Milbemectin, 17 g/l Emamectin (as its benzoate salt) or 100 g/l, 170 g/l or 180 g/l phytol were produced. In addition a blank formulation not containing any active ingredient or phytol was produced. Mixture formulations containing phytol and Abamectin, Spinosad, Milbemectin or Emamectin were produced and included in the *Frankliniella occidentalis* test as well.

Dilutions of the formulations were sprayed on bean plants (*Vicia fabia*) in a spray cabinet and thrips (*Frankliniella occidentalis)* were transferred to the plants after the leaf surfaces were dry. The degree of leaf damage caused by the thrips attack was recorded 7-14 days after infestation. The ED50 values were calculated for the formulations, table 2. The ED50 values are based on % leaf damage.

**Table 2**

| ED50 values expected and observed (g ai and phytol per ha) for the thrips (*Frankliniella occidentalis)* test on bean plants (*Vicia fabia*). ED50 values are based on % leaf damage | | | |
|---|---|---|---|
| Formulations | $ED50_{obs}$ | ED50 exp | F (exp/obs) |
| Abamectin 18 g/l EC | 2.01 | - | - |
| Abamectin 18 g/l and phytol 180 g/l EC | 17.93 | 22.11 | 1.23 |
| Spinosad 10 g/l EC | 1.49 | - | - |
| Spinosad 10 g/l and phytol 100 g/l EC | 12.76 | 16.39 | 1.28 |
| Milbemectin 10 g/l EC | 5.63 | - | - |
| Milbemectin 10 g/l and phytol 100 g/l EC | 39.71 | 61.93 | 1.56 |
| Emamectin 17 g/l EC | 1.74 | - | - |
| Emamectin 17 g/l and phytol 170 g/l EC | 15.51 | 19.14 | 1.23 |

The formulations comprising phytol without any pesticide did not have any activity on the thrips.

F ratios were calculated according to the Wadley method. The synergy factors listed in table 2 are well above 1 and synergism thus observed.

**Example 3**

The efficacy of the Abamectin and phytol EC formulations mentioned in example 2 was tested on *Spodoptera exigua* larvae on *Tradescantia crassifolia* leaves. The test on *Spodoptera exigua* larvae was done as a dip-test where *Tradescantia crassifolia* leaves were dipped in the various diluted test samples and dried. Afterwards, each leaf was infested with 5 *Spodoptera exigua* larvae. The leaf damage % was evaluated after 72 hours and a dose response curve was constructed in order to calculate the EC50 value for each treatment.

**Table 3**

| Observed and expected EC50 values (total ppm Abamectin and phytol in the dip test samples) and the synergy factor (F (exp/obs). | | | |
|---|---|---|---|
| Formulations | $EC50_{obs}$ (ppm) | $EC50_{exp}$ (ppm) | F(exp/obs) |
| Abamectin 18 g/l EC | 9.14 | - | - |
| Abamectin 18 g/l and | | | |
| phytol 180 g/l EC | 29.7 | 92.1 | > 3.10 |
| Phytol 180 g/l EC | > 1000 | - | - |

The F ratio was calculated according to the Wadley method. As the synergy factor F is higher than 1, a synergistic interaction between Abamectin and phytol is observed.

**Example 4**

A test on thrips (*Frankliniella occidentalis)* was done as described in example 2.
The results of the test, % leaf damage on bean plants, are shown in table 4.

**Table 4**

| Leaf damage (%) on bean plants attacked by thrips (*Frankliniella occidentalis)* and treated with Milbemectin or Spinosad EC containing various synergists. | | | | | |
|---|---|---|---|---|---|
| | **Milbemectin 9 g/l EC** | | | | |
| Dose g ai/ha | With 100 g/l tetradecanol | With 100 g/l hexadecanol | With 100 g/l phytol | With 100 g/l octadecanol | None |
| 1 | 47.5 | 75.0 | 73.8 | 60.0 | 92.5 |
| 10 | 27.5 | 30.0 | 23.8 | - | 41.3 |
| **-** | **Spinosad 10 g/l EC** | | | | |
| Dose g ai/ha | With 100 g/l tetradecanol | With 100 g/l hexadecanol | With 100 g/l phytol | With 100 g/l octadecanol | None |
| 1 | 80.0 | 77.5 | 78.8 | 63.8 | 87.5 |
| 10 | 2.5 | 2.3 | 3.5 | 3.3 | 8.0 |

According to table 4, the presence of the synergists, i.e. 1-tetradecanol, 1-hexadecanol, phytol and 1-octadecanol, improved the biological activity of the tested Milbemectin and Spinosad formulations against thrips (*Frankliniella occidentalis*).

**Example 5**

A mite (*Tetranychus urticae*) test was done as described in example 1. The results of the test, % leaf damage

on bean plants, are given in table 5.

**Table 5**

| Leaf damage (%) on bean plants attacked by mites (*Tetranychus urticae*) and treated with Abamectin 18 g/l EC containing various synergists. | | | | | | |
|---|---|---|---|---|---|---|
| Dose g ai/ha | Abamectin 18 g/l EC with a synergist | | | | | |
| | 180 g/l tetradecanol | 180 g/l hexadecanol | 180 g/l phytol | 180 g/l dodecanol | 180 g/l octadecanol | None |
| 2 | 18.8 | 10.0 | 6.3 | 10.0 | 12.5 | 45.0 |

Acoording to the results in table 5, the synergists, i.e. 1-tetradecanol, 1-hexadecanol, phytol, 1-dodecanol and 1-octadecanol, improved the biological activity of the tested Abamectin 18 g/l EC formulation against mites (*Tetranychus urticae*).

**Items**

1. A pesticidal composition comprising a pesticide, which is selected among glutamate- or GABA-gated chloride channel agonist pesticides, and a synergist selected among long chain alcohols.

2. The pesticidal composition according to item 1, wherein the weight ratio of pesticide to synergist is in the range of 20:1 to 1:30.

3. The pesticidal composition according to item 1 or 2, wherein the weight ratio of pesticide to synergist is in the range of 1:1.1 to 1:30.

4. The pesticidal composition according to any of the items 1 to 3, wherein the pesticide is selected among avermectins, milbemycins, spinosyns and Piperazine.

5. The pesticidal composition according to any of the items 1 to 4, wherein the synergist is at least one linear or branched aliphatic long chained alcohol, optionally comprising one or more unsaturated bonds.

6. The pesticidal composition according to any of the items 1 to 5, wherein the long chain alcohol comprises 8 or more carbon atoms.

7. The pesticidal composition according to any of the items 1 to 6, wherein the long chaned alcohol comprises 8 to 30 carbon atoms.

8. The pesticidal composition according to any of the items 1 to 7, wherein the long chain alcohol comprises 9 to 26 carbon atoms.

9. The pesticidal composition according to any of the items 1 to 8, wherein the long chain alcohol comprises 10 to 24 carbon atoms.

10. The pesticidal composition according to any of the items 1 to 9, wherein the long chain alcohol comprises 12 to 22 carbon atoms.

11. The pesticidal composition according to any of the items 1 to 10, wherein the synergist is selected among 1-dodecanol, 1-tetradecanol, 1-hexadecanol, 1-octadecanol and phytol, and mixtures thereof.

12. The pesticidal composition according to any of the items 1 to 11, wherein the pesticide is selected among Abamectin, Aversectin C, Doramectin, Emamectin, Eprinomectin, Ivermectin, Selamectin, Milbemectin, Milbemycin oxime, Moxidectin, Lepimectin, Nemadectin, Spinosad, Spinetoram, Piperazine, and mixtures and salts thereof.

13. The pesticidal composition according to any of the items 1 to 12, wherein the pesticide is selected among Abamectin, Aversectin C, Emamectin, Ivermectin, Milbemycin, Selamectin, Spinosad, and mixtures and salts thereof.

14. The pesticidal composition according to any of the items 1 to 13, which is formulated as an emulsifiable concentrate or an oil-in-water formulation.

15. The pesticidal composition according to any of the items 1 to 14, which is adapted for use in a method of controlling harmful pests in beneficial crops.

16. The pesticidal composition according to any of the items 1 to 15 wherein the composition is formulated for use in a method of controlling harmful pests in or on animals, including humans.

17. A kit comprising (i) a first composition comprising at least one pesticide selected among glutamate- or GABA-gated chloride channel agonist pesticides and (ii) a second composition comprising a synergistic amount of a synergist selected among long chain alcohols.

18. A method of obtaining a pesticidal composition containing a pesticide and a synergist, said composition having an actual pesticidal effect higher than the sum of pesticidal effects of each of the pesticide and the synergist when taken alone, comprising the step of replacing a part of the amount of pesticide, which is selected among glutamate- or GABA-gated chloride channel agonist pesticides, by a synergistic amount of a synergist selected among long chain alcohols.

19. A method of reducing the amount of pesticide in a pesticidal composition while maintaining a similar pesticidal effect, comprising the step of replacing a part of the amount of pesticide, which is selected among glutamate- or GABA-gated chloride channel agonist pesticides, by a synergistic amount of a synergist selected among long chain alcohols.

20. A method for controlling harmful pests on plants, comprising applying to a plant to be treated a composition containing a pesticide and a synergist, said composition having an actual pesticidal effect higher than the sum of pesticidal effects of each of the pesticide and the synergist when administered alone, wherein a part of the amount of pesticide, which is selected among glutamate- or GABA-gated chloride channel agonist pesticides, is replaced by a synergistic amount of a synergist selected among long chain alcohols.

21. A method for controlling harmful pests in or on animals including humans, comprising administrating to an animal or a human in need thereof a pharmaceutical or veterinary effective amount of a composition containing a pesticide and a synergist, said composition having an actual pesticidal effect higher than the sum of pesticidal effects of each of the pesticide and the synergist when administered alone, wherein a part of the amount of pesticide, which is selected among glutamate- or GABA-gated chloride channel agonist pesticides, is replaced by a synergistic amount of a synergist selected among long chain alcohols.

22. A method for obtaining reduced application rates of a pesticide comprising the steps of

providing a pesticidal composition containing a pesticide, which is selected among glutamate- or GABA-gated chloride channel agonist pesticides, and an synergistic mount of a synergist selected among long chain alcohols, applying the pesticidal composition to a plant in an amount sufficient for controlling harmful pest.

23. A method for obtaining reduced dose rates of a pesticide comprising the steps of

providing a pesticidal composition containing a pesticide, which is selected among glutamate- or GABA-gated chloride channel agonist pesticides, and an synergistic mount of a synergist selected among long chain alcohols, administering the pesticidal composition to an animal or a human in need thereof in a pharmaceutical or veterinary effective amount sufficient for controlling harmful pests.

24. The method according to any of the items 18 to 23, wherein between 5% and 97% by weight of pesticide is replaced by a synergistic amount of the synergist.

25. The method according to item 24, wherein between 20% and 90% by weight of pesticide is replaced by a synergistic amount of the synergist.

26. The method according to any of the items 18 to 25, wherein the weight ratio of pesticide to synergist is in the range of 20:1 to 1:30.

27. The method according to item 26, wherein the weight ratio of pesticide to synergist is in the range of 1:1.1 to 1:30.

28. The method according to any of the items 18 to 27, wherein the pesticide is selected among avermectins, milbemycins, spinosyns and Piperazine.

29. The method according to any of the items 18 to 28, wherein the synergist is at least one linear or branched aliphatic long chain alcohol, optionally comprising one or more unsaturated bonds.

30. The method according to item 29, wherein the long chain alcohol comprises 8 or more carbon atoms.

31. The method according to item 30, wherein the long chain alcohol comprises 8 to 30 carbon atoms.

32. The method according to item 31, wherein the long chain alcohol comprises 9 to 26 carbon atoms.

33. The method according to item 32, wherein the long chain alcohol comprises 10 to 24 carbon atoms.

34. The method according to item 33, wherein the long chain alcohol comprises 12 to 22 carbon atoms.

35. The method according to any of the items 18 to 34, wherein the synergist is selected among 1-dodecanol, 1-tetradecanol, 1-hexadecanol, 1-octadecanol and phytol, and mixture thereof.

36. The method according to any of the previous items wherein the pesticide is selected among Abamectin, Aversectin C, Doramectin, Emamectin, Eprinomectin, Ivermectin, Selamectin, Milbemectin, Milbemycin oxime, Moxidectin, Lepimectin, Nemadectin, Spinosad, Spinetoram, Piperazine, and salts and mixtures thereof.

37. The method according to item 36, wherein the pesticide is selected among Abamectin, Aversectin C, Emamectin, Ivermectin, Milbemycin, Selamectin, Spinosad, and mixtures and salts thereof.

38. A composition obtainable by the method according to item 18 or any of the items 24 to 37.

39. Use of a synergist selected among long chain alcohols for enhancing the effect of a pesticidal composition comprising a pesticide, which is selected among glutamate- or GABA-gated chloride channel agonist pesticides.

40. Use of a synergist selected among long chain alcohols for preparation of a pesticidal composition having a reduced amount of pesticide while maintaining a similar pesticidal effect, wherein the pesticide is selected among glutamate- or GABA-gated chloride channel agonist pesticides.

41. Use of a synergist selected among long chain alcohols for reducing the dose rate of a pesticidal pharmaceutical or veterinary composition in the control of pests while maintaining a similar pesticidal effect, wherein the pesticide is selected among glutamate- or GABA-gated chloride channel agonist pesticides.

42. Use of a synergist selected among long chain alcohols for reducing the application rate of a pesticidal agrochemical composition in the control of pests while maintaining a similar pesticidal effect, wherein the pesticide is selected among glutamate- or GABA-gated chloride channel agonist pesticides.

43. Use of a pesticide selected among glutamate- or GABA-gated chloride channel agonist pesticides, and a synergist selected among long chain alcohols, for the preparation of a pesticidal composition capable of controlling harmful pests, said composition having an actual pesticidal effect higher than the sum of pesticidal effects of each of the pesticide and the synergist when taken alone.

44. Use of a pesticide selected among glutamate- or GABA-gated chloride channel agonist pesticides, and a synergist selected among long chain alcohols, for the manufacture of a medicament for the control of pests in or on humans or animals or their environs, said medicament comprising a reduced amount of pesticide while maintaining a similar pesticidal effect by replacing a part of the amount of pesticide with a synergistic amount of the synergist.

45. Use according to item 44, wherein the medicament is used for controlling the pathogenic endoparasites or ectoparasites of human or animals.

46. Use according to any of the items 39 to 45, wherein between 5% and 97% by weight of pesticide is replaced by a synergistic amount of the synergist.

47. The use according to item 46, wherein between 20% and 90% by weight of pesticide is replaced by a synergistic amount of the synergist.

48. The use according to any of the items 39 to 47, wherein the weight ratio of pesticide to synergist is in the range of 20:1 to 1:30.

49. The use according to item 48, wherein the weight ratio of pesticide to synergist is in the range of 1:1.1 to 1:30.

**Claims**

**1.** A pesticidal composition comprising a pesticide, which is selected among glutamate- or GABA-gated chloride channel agonist pesticides, and a synergist selected among long chain alcohols.

**2.** The pesticidal composition according to claim 1, wherein the weight ratio of pesticide to synergist is in the range of 1:1.1 to 1:30.

**3.** The pesticidal composition according to claim 1 or 2, wherein the pesticide is selected among avermectins, milbemycins, spinosyns and Piperazine.

**4.** The pesticidal composition according to any of the claims 1 to 3, wherein the long chain alcohol comprises 12 to 22 carbon atoms.

**5.** The pesticidal composition according to any of the claims 1 to 4, wherein the synergist is selected among 1-dodecanol, 1-tetradecanol, 1-hexadecanol, 1-octadecanol and phytol, and mixtures thereof.

**6.** A method of obtaining a pesticidal composition containing a pesticide and a synergist, said composition having an actual pesticidal effect higher than the sum of pesticidal effects of each of the pesticide and the synergist when taken alone, comprising the step of replacing a part of the amount of pesticide, which is selected among glutamate- or GABA-gated chloride channel agonist pesticides, by a synergistic amount of a synergist selected among long chain alcohols.

**7.** A method for controlling harmful pests on plants, comprising applying to a plant to be treated a composition containing a pesticide and a synergist, said composition having an actual pesticidal effect higher than the sum of pesticidal effects of each of the pesticide and the synergist when administered alone, wherein a part of the amount of pesticide, which is selected among glutamate- or GABA-gated chloride channel agonist pesticides, is replaced by a synergistic amount of a synergist selected among long chain alcohols.

**8.** A method for controlling harmful pests in or on animals including humans, comprising administrating to an animal or a human in need thereof a pharmaceutical or veterinary effective amount of a composition containing a pesticide and a synergist, said composition having an actual pesticidal effect higher than the sum of pesticidal effects of each of the pesticide and the synergist when administered alone, wherein a part of the amount of pesticide, which is selected among glutamate- or GABA-gated chloride channel agonist pesticides, is replaced by a synergistic amount of a synergist selected among long chain alcohols.

**9.** Use of a pesticide selected among glutamate- or GABA-gated chloride channel agonist pesticides, and a synergist selected among long chain alcohols, for the manufacture of a medicament for the control of pests in or on humans or animals or their environs, said medicament comprising a reduced amount of pesticide while maintaining a similar pesticidal effect by replacing a part of the amount of pesticide with a synergistic amount of the synergist.

**10.** A kit comprising (i) a first composition comprising at least one pesticide selected among glutamate- or GABA-gated chloride channel agonist pesticides and (ii) a second composition comprising a synergistic amount of a synergist

selected among long chain alcohols.

European Patent Office

# PARTIAL EUROPEAN SEARCH REPORT

which under Rule 63 of the European Patent Convention shall be considered, for the purposes of subsequent proceedings, as the European search report

Application Number
EP 07 11 5808

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | WO 94/24862 A (FERMONE CORP INC [US]) 10 November 1994 (1994-11-10)<br>* page 1, line 6 - line 12 *<br>* page 2, line 7 - line 9 *<br>* page 3, line 15 - page 9, line 6 *<br>* page 10, line 19 - page 11, line 15 *<br>* page 12; table 1 *<br>* page 28; table 9 *<br>* page 30 - page 39; examples 2-4 * | 1-4,6,7, 9,10<br>1-10 | INV.<br>A01N43/22<br>A01N43/60<br>A01N43/90<br>A01N31/02<br>A01N49/00<br>A01P7/00 |
| Y | EP 0 583 774 A (ISRAEL STATE [IL]) 23 February 1994 (1994-02-23)<br>* claims 4,5 *<br>* page 3, line 11 - line 19 *<br>* pages 7-8; example 4 * | 1-10 | |
| X | US 2006/024345 A1 (JANSSEN HERWIG [US] ET AL) 2 February 2006 (2006-02-02)<br>* paragraphs [0002], [0016], [0020], [0039] * | 1-6,8-10 | |

-/--

TECHNICAL FIELDS SEARCHED (IPC)

A01N

## INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

3

| Place of search | Date of completion of the search | Examiner |
|---|---|---|
| The Hague | 17 July 2008 | Lamers, Wolfram |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04E07)

European Patent Office

# PARTIAL EUROPEAN SEARCH REPORT

Application Number
EP 07 11 5808

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2007/057028 A (CHEMINOVA AS [DK]; PEDERSEN MORTEN [DK]; WOLDUM HENRIETTE SIE [DK]) 24 May 2007 (2007-05-24)<br>* page 4, line 5 - line 15 *<br>* page 5, line 5 - line 9 *<br>* page 9, lines 4,9-11 *<br>* pages 16-32 *<br>----- | 1-3,6,7, 9,10 | |
| X | DATABASE CA [Online]<br>CHEMICAL ABSTRACTS SERVICE, COLUMBUS, OHIO, US;<br>XP002488557<br>retrieved from STN-INTERNATIONAL<br>Database accession no. 133:94566<br>* abstract *<br>& CN 1 210 716 A (GELIN PRACTICAL TECHNOLOGY INST.)<br>17 March 1999 (1999-03-17)<br>----- | 1-3,6, 8-10 | TECHNICAL FIELDS SEARCHED (IPC) |
| X | DATABASE CA [Online]<br>CHEMICAL ABSTRACTS SERVICE, COLUMBUS, OHIO, US;<br>N.O. SHAW ET AL.: "Preformulation stability screening of ivermectin with non-ionic emulsion excipients"<br>XP002488558<br>retrieved from STN-INTERNATIONAL<br>Database accession no. 131:106688<br>* abstract *<br>& PHARMAZIE,<br>vol. 54, no. 5, 1999, pages 372-376,<br>----- | 1,3,4,6, 9,10 | |
| D,A | US 4 560 677 A (DYBAS RICHARD A [US])<br>24 December 1985 (1985-12-24)<br>* the whole document *<br>----- | 1-10 | |

3

EPO FORM 1503 03.82 (P04C10)

European Patent Office

INCOMPLETE SEARCH SHEET C

Application Number
EP 07 11 5808

Although claim 8 is directed to a method of treatment of the human/animal body (Article 53(c) EPC), the search has been carried out and based on the alleged effects of the composition.

-----

## ANNEX TO THE EUROPEAN SEARCH REPORT ON EUROPEAN PATENT APPLICATION NO. EP 07 11 5808

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2008

| Patent document cited in search report | | Publication date | Patent family member(s) | | | Publication date |
|---|---|---|---|---|---|---|
| WO 9424862 | A | 10-11-1994 | AU | 6779394 | A | 21-11-1994 |
| | | | CA | 2161511 | A1 | 10-11-1994 |
| | | | CN | 1125382 | A | 26-06-1996 |
| | | | EP | 0696169 | A1 | 14-02-1996 |
| | | | JP | 8512293 | T | 24-12-1996 |
| EP 0583774 | A | 23-02-1994 | AT | 172598 | T | 15-11-1998 |
| | | | AU | 4473093 | A | 24-02-1994 |
| | | | AU | 7542796 | A | 13-02-1997 |
| | | | CA | 2104359 | A1 | 19-02-1994 |
| | | | CN | 1093221 | A | 12-10-1994 |
| | | | DE | 69321792 | D1 | 03-12-1998 |
| | | | DE | 69321792 | T2 | 10-06-1999 |
| | | | IL | 102846 | A | 08-08-2001 |
| | | | NZ | 248434 | A | 25-06-1996 |
| US 2006024345 | A1 | 02-02-2006 | US | 2004048813 | A1 | 11-03-2004 |
| WO 2007057028 | A | 24-05-2007 | AU | 2006314902 | A1 | 24-05-2007 |
| CN 1210716 | A | 17-03-1999 | NONE | | | |
| US 4560677 | A | 24-12-1985 | NONE | | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4560677 A
- US 3950360 A
- US 4310519 A
- US 4378353 A
- US 5288710 A
- US 4427663 A
- US 4199569 A
- US 5015630 A
- US 5089480 A
- US 5981500 A
- WO 02068442 A1
- US 6933260 B
- US 4547520 A
- US 4900753 A
- US 5346918 A
- US 5428034 A
- US 4587247 A
- US 5405867 A
- US 5276033 A
- US 4945105 A
- US 4963582 A
- US 4869901 A
- US 5614470 A
- US 5496931 A
- US 5539089 A
- US 5670364 A
- US 6001981 A
- WO 9700265 A1
- WO 2002077004 A1
- WO 2002077005 A1
- WO 2001019840 A1
- WO 0170028 A1


### Non-patent literature cited in the description


- **COLBY, S. R.** Calculating synergistic and antagonistic responses of herbicide combination. *Weeds,* 1967, vol. 15, 20-22
- **LIMPEL et al.** *Proc. NEWCC,* 1962, vol. 16, 48-53
- Isoboles, a graphic representation of synergism in pesticides. *Netherlands Journal of Plant Pathology,* 1964, vol. 70, 73-80
- **LEVI et al.** *EPPO-Bulletin,* 1986, vol. 16, 651-657
- **D.L. RICHER.** *Pesticide Science,* 1987, vol. 19, 309-315